# EUROPÄISCHE PATENTSCHRIFT

(11) **EP 1 155 895 B1**
(45) Veröffentlichungstag und Bekanntmachung des Hinweises auf die Patenterteilung: **13.04.2005**
(21) Anmeldenummer: 01109806.8
(22) Anmeldetag: 21.04.2001
(51) Int. Cl.: B60K 11/08

(54) **Wärmetauscheranordnung an einer vorderen Tragstruktur eines Kraftwagens**
Arrangement of heat exchanger on a front support structure of a motor vehicle
Arrangement d'échangeur de chaleur sur une structure de support avant d'une automobile

(30) Priorität: 15.05.2000 DE 10023571
(43) Veröffentlichungstag der Anmeldung: 21.11.2001
(73) Patentinhaber: DaimlerChrysler AG, 70567 Stuttgart (DE)
(72) Erfinder: Baumann, Karl-Heinz, 71149 Bondorf (DE); Bruhnke, Ulrich, 71139 Ehningen (DE); Kohler, Jürgen, 71134 Aidlingen (DE); Krempels, Uwe, 71032 Böblingen (DE); Schinke, Hansjörg, 71088 Holzgerlingen (DE)

(56) Entgegenhaltungen:
- EP-A- 0 494 116
- WO-A-00/26078
- DE-A- 3 024 312
- DE-A- 19 831 256
- DE-A- 19 843 928
- US-A- 5 271 473
- US-A- 5 819 408

## Beschreibung

Die Erfindung betrifft eine Wärmetauscheranordnung an einer vorderen Tragstruktur eines Kraftwagens der im Oberbegriff des Hauptanspruchs angegebenen Art, wie in der WO-A-00/26078 offenbart.

Bei einer derartigen, der DE 30 24 312 A1 zu entnehmenden Wärmetauscheranordnung ist eine Durchtrittsöffnung für einen Kühlluftstrom vorgesehen, die aus einer sich in Fahrzeugquerrichtung erstreckenden ebenen Frontwand ausgespart und weitgehend von einem Wärmetauschermodul überdeckt ist. Das Wärmetauschermodul ist dabei auf nicht näher beschriebene Weise hinter der Frontwand angebracht. Hierbei sind keine Angaben zum Verhalten der Knautschzone beim Frontalaufprall gemacht.

Der Erfindung liegt die Aufgabe zugrunde, eine Wärmetauscheranordnung der eingangs genannten Art dahingehend weiterzuentwickeln, dass die Aufprallsteifigkeit der an die Durchtrittsöffnung angrenzenden Wandbereiche deutlich verbessert werden kann.

Die erfindungsgemäße Lösung dieser Aufgabe ergibt sich aus den Merkmalen des Hauptanspruchs.

Vorteilhafte Ausgestaltungen der Erfindung sind den übrigen Ansprüchen zu entnehmen.

Erfindungsgemäß ist das Wärmetauschermodul so an der vorderen Tragstruktur angebracht, daß es bei den Bereich der Durchtrittsöffnung beaufschlagenden Frontalkollisionen unter Absorption von Aufprallenergie verstärkend mit den Wandbereichen der Tragstruktur zusammenwirkt. Dadurch wird die im Bereich der Durchtrittsöffnung bisher wenig zur Aufnahme von Unfallenergie geeignete Tragstruktur bedeutend verstärkt und die lastverteilende Wirkung auf die Vorbaustruktur bei frontal einwirkender Beanspruchung deutlich verbessert. Beispielsweise kann die Wärmetauscheranordnung mit den die Durchtrittsöffnung begrenzenden Wandbereichen derart zusammenwirken, dass die Aufprallkräfte bei einem Frontalaufprall mit geringer Breitenüberdeckung durch die Anordnung zugbandartig auch auf die jeweils nicht getroffene Vorbauseite übertragen werden.

Ragt das Wärmetauschermodul zumindest teilweise über die Durchtrittsöffnung hinaus und überdeckt mit seinen Endbereichen die die Durchtrittsöffnung begrenzenden Wandbereiche, so kann das Modul zur Übertragung hoher Unfallkräfte besonders stabil an den Wandbereichen abgestützt und/oder befestigt werden. Eine besonders gute Abstützung des Wärmetauschermoduls kann dabei erzielt werden, wenn dieses vor den Wandbereichen angeordnet ist.

Eine großformatige Frontwand weist beim Frontalaufprall eine sehr hohe Biegesteifigkeit und lastverteilende Wirkung über die nahezu gesamte Breite und Höhe der Vorbaustruktur auf, wodurch die Aufprallkräfte bei einseitiger Frontalaufprallbelastung auf die jeweils nicht getroffene Vorbauseite geleitet werden.

Das Wärmetauschermodul kann besonders gut zugbandartig mit der Tragstruktur verstärkend zusammenwirken, wenn zwei seiner einander entgegengesetzten Endbereiche über ihre gesamte Längserstreckung an den Wandbereichen der Tragstruktur befestigt sind.

Ein schubladenartig in zugeordnete Schiebeführungen einschiebbares Wärmetauschermodul ist nicht nur einfach montierbar, sondern mit den überstehenden Endbereichen auch besonders stabil im Bereich der Führungsschienen befestigbar. Hierbei hat sich eine einteilige Ausbildung der stranggepressten Frontwand und der Schiebeführungen als besonders kostengünstig erwiesen.

Durch im Überdeckungsbereich mit dem Wärmetauschermodul angeordnete weitere Wärmetauschermodule kann eine platzsparende und zur Übertragung noch größerer Kräfte geeignete Anordnung geschaffen werden.

Schließlich können an der Frontwand auf einfache Weise weitere Aggregate angebracht werden, die bei einem Frontalaufprall in die Deformationsreihenfolge eingebunden sind.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig.1: eine Perspektivansicht von schräg vorne oben auf eine Tragstruktur eines Kraftwagens mit einer großformatigen Frontwand, aus der eine Durchtrittsöffnung für die erfindungsgemäße Wärmetauscheranordnung ausgespart ist;
- Fig.2: eine Perspektivansicht von schräg vorne oben auf die teilweise mit Verkleidungsteilen beplankte Tragstruktur nach Fig.1;
- Fig.3: eine perspektivische Explosionsdarstellung auf die Frontwand und ein schubladenartig in Schiebeführungen einschiebbares Modul der Wärmetauscheranordnung sowie einen in Schiebeführungen einschiebbaren Längsschenkel eines Frontmoduls;
- Fig.4: einen vergrößerten Schnitt durch die Frontwand und die an dieser angeordnete Wärmetauscheranordnung entlang der Linie IV-IV in Fig.3.

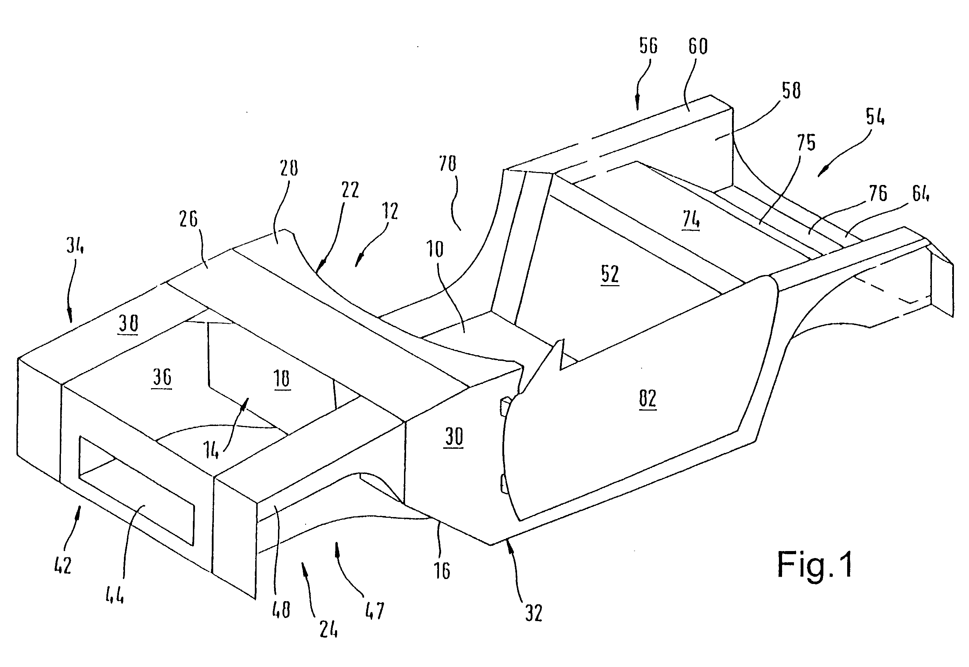

In Fig.1 ist in Perspektivansicht von schräg vorne oben eine Tragstruktur eines Kraftwagens dargestellt, die einen tragenden Boden 10 in Leichtbauweise umfaßt. Die im weiteren beschriebene Tragstruktur weist überwiegend energieabsorbierende, eigensteife und ebene Leichtbauplatten auf, die vorzugsweise je nach Anforderung in Sandwichbauweise, mit Wabenstruktur, in Holz, in Aluminium, als Faserverbund, als Strangpreßprofil oder dgl. gefertigt sind. Um günstige Fertigungsbedingungen zu erreichen, können die einzelnen Plattenabschnitte sowohl einteilig ausgebildet und abgewinkelt als auch mehrteilig gefügt sein. Vorn im Fußraumbereich 12 geht der Boden 10 in eine Stirnwand 14 in Leichtbauweise über, die einen an den Boden 10 anschließenden, schräg nach vorn oben gerichteten Übergangsbereich 16 und einen davon oberhalb angeordneten, etwa vertikalen Bereich 18 umfaßt. Seitlich und oben ist der Fußraumbereich 12 von einer Plattenanordnung in Leichtbauweise begrenzt, die gemeinsam mit dem Boden 10 und der Stirnwand 14 einen Stützkasten 22 für eine an diesem befestigte Vorbaustruktur 24 bilden. Dabei umfaßt die Plattenanordnung eine vordere und eine hintere obere Leichtbauplatte 26,28 sowie seitliche Stützkastenwände 30, die den Fußraumbereich 12 seitlich begrenzen und jeweils einen Wandbereich einer Seitenwand 32 der Tragstruktur bilden.

Die Vorbaustruktur 24 umfaßt zwei vordere Längsträger 34 in Leichtbauweise, die jeweils einen abgewinkelten Querschnitt mit einem etwa vertikalen Plattenschenkel 36 und einen quer dazu verlaufenden Plattenschenkel 38 aufweisen. Die vertikalen Plattenschenkel 36 sind gegenüber der zugeordneten seitlichen Stützkastenwand 30 in Richtung der Längsmittenebene und etwa parallel zu dieser verlaufend nach innen versetzt angeordnet. Der jeweils quer verlaufende Plattenschenkel 38 ragt über etwa einem rechten Winkel seitlich vom zugehörigen vertikalen Plattenschenkel 36 nach außen ab und erstreckt sich bis zu der zugeordneten Seitenwand 32. Die quer verlaufenden Plattenschenkel 38 schließen mit ihren hinteren Enden etwa auf Höhe der vorderen oberen Leichtbauplatte 26 an diese an.

Am vorderen Ende der Längsträger 34 ist eine in Fahrzeugquerrichtung und etwa vertikal verlaufende Frontwand 42 befestigt, die hier aus einem Strangpressprofil besteht. Diese Leichtbauwand 42 ist hier in ihrer Höhe an den vertikalen Plattenschenkel 36 und in ihrer Breite an den Stützkasten 22 angepaßt. Die quer verlaufenden Plattenschenkel 38 der Längsträger 34 schließen dabei mit ihren vorderen Enden etwa auf Höhe der Frontwand 42 an diese an. Die sich nahezu über die ganze Vorbaubreite und -höhe erstreckende Frontwand 42 mit der im weiteren noch beschriebenen Wärmetauscheranordnung erzeugt durch ihre Biegesteifigkeit eine lastverteilende Wirkung und damit eine homogene Reaktionskraft bei frontal einwirkender Beanspruchung, wie beim Frontalaufprall, über die nahezu gesamte Breite und Höhe der Vorbaustruktur 24. Mit anderen Worten sorgt bei einseitiger Frontalaufprallbelastung die Frontwand 42 nicht nur in Längsrichtung für eine Lastverteilung, sondern die Aufprallkräfte werden zugbandartig auch auf die jeweils nicht getroffene Vorbauseite geleitet. Die Leichtbauplatte 42, die sowohl einteilig als auch - wie hier gezeigt - mehrteilig gefügt ausgebildet sein kann, ist mit einer Durchtrittsöffnung 44 für einen Kühlluftstrom einer im weiteren noch beschriebene Wärmetauscheranordnung versehen. Die Seitenwände 32 sind bis zu der Frontwand 42 nach vorne verlängert und mit jeweils einem Radausschnitt 47 versehen. Demgemäß ist die Seitenwand 32 über die überwiegende Länge des zugeordneten Längsträgers 34 als relativ schmaler Steg 48 ausgebildet, der mit dem quer verlaufenden Plattenschenkel 38 des entsprechenden Längsträgers 34 unter etwa einem rechten Winkel sowie mit der Frontwand 42 fest verbunden ist. Insgesamt bilden der vertikale sowie der quer verlaufende Plattenschenkel 36,38, der schmale Steg 48, die Stirnwand 14 und die Frontwand 42 einen vorderen Radkasten der Tragstruktur.

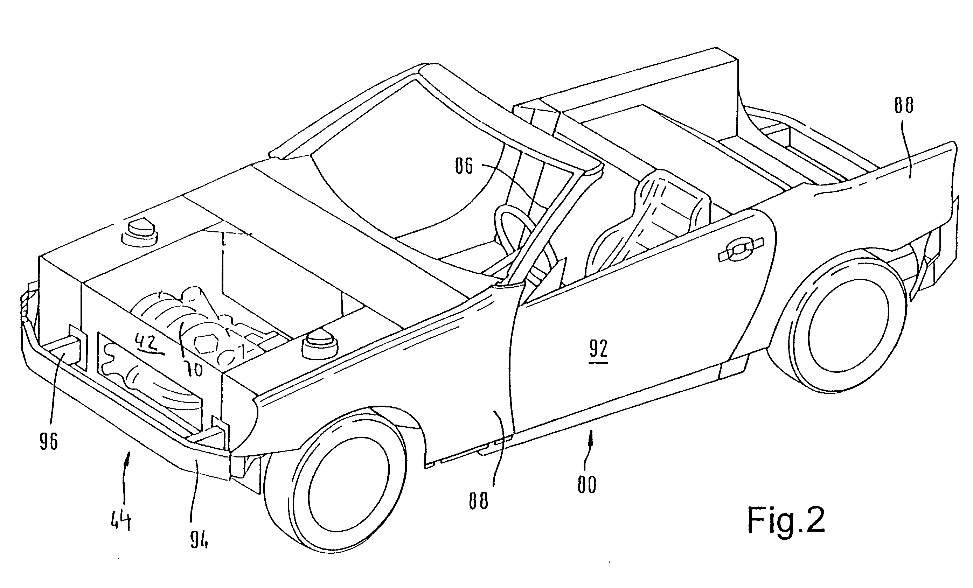

Hinten geht der Boden 10 in eine schräg nach hinten oben ragende Hecktrennwand 52 über, die aus einer Leichtbauplatte gebildet ist und sich zwischen den Seitenwänden 32 über die gesamte Breite des Bodens 10 erstreckt. Die Tragstruktur weist hinter der Hecktrennwand 52 eine Heckstruktur 54 mit hinteren Längsträgern 56 aus Leichtbauplatten auf, die jeweils einen in Fahrzeughochrichtung und einen in Fahrzeuglängsrichtung abgewinkelten Plattenschenkel 58,60 aufweisen. Am hinteren Ende der hinteren Längsträger 56 ist eine Heckwand 64 befestigt, die in Leichtbauweise gestaltet ist und in Fahrzeugquerrichtung sowie etwa vertikal verläuft. Insgesamt bilden der vertikale sowie der quer verlaufende Plattenschenkel 58,60, die Seitenwand 32, die Hecktrennwand 52 und die Heckwand 64 einen hinteren Radkasten der Tragstruktur. Die hinteren Längsträger 56 sind über eine Plattenanordnung aus Leichtbauplatten 74,75,76 fest miteinander zu einem Kasten verbunden. Die Seitenwand 32 weist einen Türausschnitt 78 für eine Seitentür 80 (Fig.2) auf, von der hier lediglich eine linke Türinnenwand 82 dargestellt ist.

Die in Fig.2 in Perspektivansicht gezeigte Tragstruktur ist unter einer Beplankung angeordnet, von der hier an entsprechenden Aufnahmen der Tragstruktur festgelegte Verkleidungsteile 88 des rechten vorderen und hinteren Kotflügels gezeigt sind. Zwischen den vorderen Längsträgern 34 ist ein schematisch angedeuteter Motor 70 vorgesehen, wobei die Wärmetauscheranordnung der Übersichtlichkeit halber hier nicht dargestellt ist. An der Vorderseite der Frontwand 42 ist zusätzlich ein Frontmodul 50 erkennbar, welches einen über zwei Längsschenkel 96 an der Leichtbauplatte festgelegten Querträger 94 umfaßt. Dabei können in die Längsschenkel 96 Crashboxen integriert sein, die der Energieabsorption bei einem Frontalaufprall dienen.

Im Falle eines Frontalunfalls weist die Tragstruktur vorzugsweise eine Deformationsreihenfolge auf, bei der zunächst das Frontmodul 50 mit dem Querträger 94 und den Längsschenkeln 96 deformiert wird. Bei einem stärkeren Aufprall wird dann die Vorbaustruktur 24 mit der Frontwand 42 und den vorderen Längsträgern 34 beaufschlagt, wobei die Sicherheitsfahrgastzelle auch bei starken Unfällen weitestgehend in ihrer Form erhalten bleibt. Mit anderen Worten trennt die Frontwand 42 den Bagatellschadenbereich der Tragstruktur von dem Knautschbereich für mittlere und hohe Unfallschweren, d.h. die vor der Frontwand 42 liegenden Bauteile oder Komponenten können beim Frontalaufprall verformt werden, ohne daß die dahinter liegende Struktur bereits Deformationen erfährt. Die Deformationsreihenfolge kann beispielsweise durch die Verwendung unterschiedlicher Materialien oder verschiedener Plattendicken erreicht werden. Die vorderen Längsträger 34 können einen vorderen Abschnitt aufweisen, der bei einem Reparaturcrash relativ einfach ersetzbar ist. Gemäß der Vorbaustruktur 24 ist bevorzugt auch die Heckstruktur 54 ausgebildet.

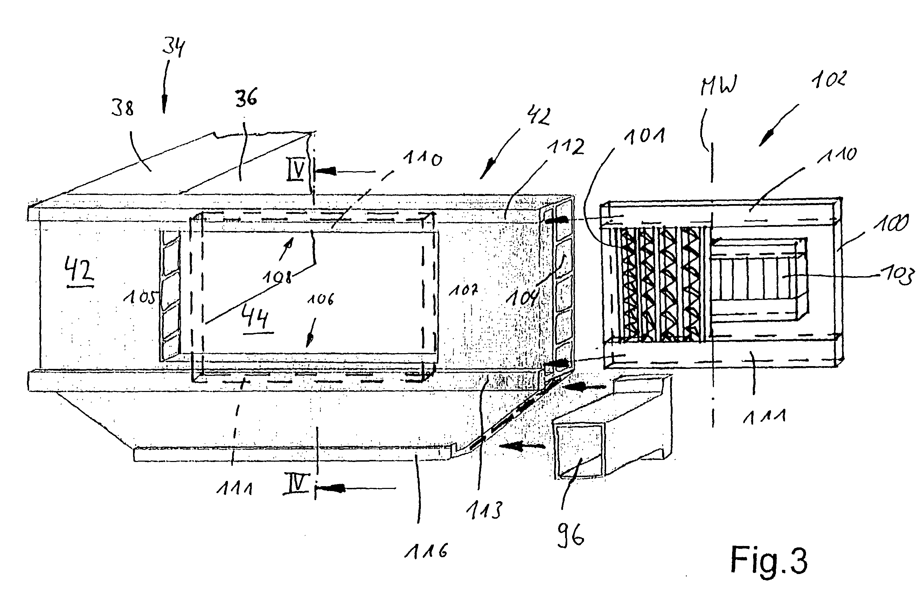

Fig. 3 zeigt in perspektivischer Explosionsdarstellung die Frontwand 42 und ein schubladenartig in Schiebeführungen der Frontwand 42 einschiebbares Wärmetauschermodul 100 der Wärmetauscheranordnung 102 sowie einen in Schiebeführungen einschiebbaren Längsschenkel 96 des Frontmoduls 50. Das Wärmetauschermodul 100 ist hier dem Kühlwasserkreislauf des Motors 70 zugeordnet. Von vorne gesehen rechts einer vertikal verlaufenden Mittellinie MW der Wärmetauscheranordnung 102 ist ein am Wärmetauschermodul 100 vorgeordnet befestigtes weiteres Modul 103 erkennbar. Dieses weitere Wärmetauschermodul 103 kann beispielsweise dem Ölkreislauf oder der Klimaanlage zugeordnet sein. Auch die Verwendung des Moduls 103 als Ladeluftkühler wäre denkbar. Auf der linken Seite der Mittellinie MW, auf der das Modul 103 nicht dargestellt ist, sind zwischen einem oberen und unteren Wasserkasten verlaufende Kühlrippen 101 des Wärmetauschermoduls 100 erkennbar. Das weitere Modul 103 liegt insgesamt im Überdeckungsbereich des Moduls 100.

Von den mit ihrem vorderen Enden die Frontwand 42 tragenden Längsträgern 34 sind in Fig.3 lediglich die beiden Plattenschenkel 36,38 des rechten Längsträgers 34 angedeutet. Die Kammern 104 der aus einem Strangpreßprofil hergestellten Frontwand 42 verlaufen in Fahrzeugquerrichtung, wobei aus dem Mittelbereich der Wand 42 die Durchtrittsöffnung 44 ausgespart ist. Die Durchtrittsöffnung 44 ist etwa rechtwinklig ausgebildet und hier auf allen vier Randseiten von Wandbereichen 105-108 der Frontwand 42 begrenzt. Dabei wäre es auch denkbar, dass die Durchtrittsöffnung 44 lediglich auf zwei einander gegenüberliegenden Seiten - hier entweder seitlich von dann separaten Wandbereichen 105 und 107, oder oben und unten von dann separaten Wandbereichen 106 und 108 der Frontwand 42 - begrenzt wäre, wobei die jeweils einander gegenüberliegenden, dann separaten Wandbereich 105 und 107, oder 106 und 108 über Verbindungsträger miteinander fest verbunden sein könnten. Mit anderen Worten wäre also auch ein wenigstens zwei Wandbereiche 105-108 der Tragstruktur umfassender Rahmen für die Durchtrittsöffnung 44 möglich, wobei die beiden einander gegenüberliegenden Wandbereiche gemeinsam mit besagten Verbindungsträgern die Rahmenschenkel des Rahmens bilden könnten. Seitlich unten läuft die Wand 42 etwa V-förmig in Richtung nach innen zu, wobei natürlich auch eine rechteckige Gestaltung der Frontwand 42 möglich wäre.

Das Wärmetauschermodul 100 der Wärmetauscheranordnung 102 ist hier derart bemessen, dass es mit einem oberen und unteren Endbereich 110,111 über die Durchtrittsöffnung 44 hinausragt.

Mit diesen überstehenden Endbereichen 110,111 ist das Wärmetauschermodul 100 - wie mit Pfeilen angedeutet - schubladenartig in zugeordnete Schiebeführungen 112,113 des oberen und unteren Wandbereichs 106,108 der Frontwand 42 einschiebbar. Die eingeschobene Lage des Wärmetauschermoduls 100 bzw. der Wärmetauscheranordnung 102 ist gestrichelt angedeutet, wobei das Wärmetauschermodul 100 in dem hier gezeigten Ausführungsbeispiel vor der Durchtrittsöffnung 44 angeordnet ist. In der eingeschobenen Position ist es ersichtlich, dass das die Durchtrittsöffnung 44 weitgehend überdeckende Wärmetauschermodul 100 mit seinem oberen und unteren Endbereich 110,111 über die Durchtrittsöffnung 44 hinausragt bzw. den zugeordneten oberen und unteren Wandbereich 106,108 zumindest teilweise überdeckt. In diesem Zusammenhang wäre es auch denkbar, dass das Wärmetauschermodul 100 außerdem mit seinen beiden seitlichen Endbereichen seitlich über die Durchtrittsöffnung 44 hinausragt; auch möglich wäre es, dass das Wärmetauschermodul 100 anstatt mit dem oberen und unteren Endbereich 110,111 ausschließlich mit den seitlichen Endbereichen über die Durchtrittsöffnung 44 hinausragt.

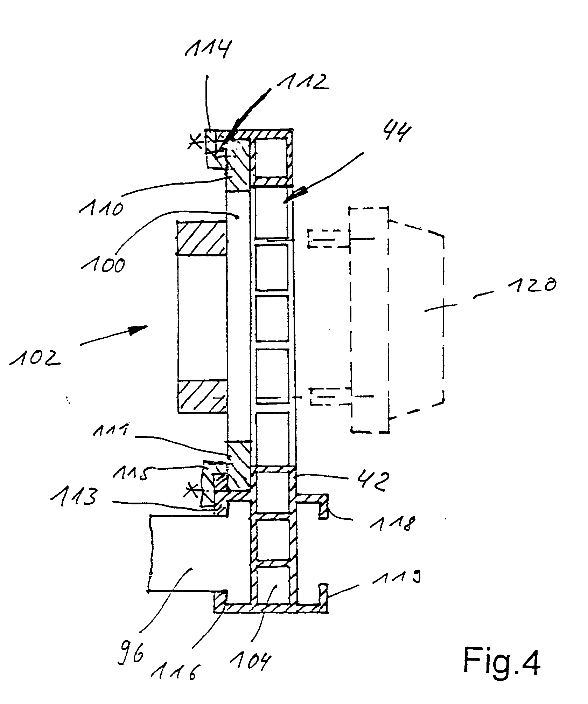

In Zusammenschau mit Fig.4, die einen vergrößerten Schnitt durch die Frontwand 42 und die in der eingeschobenen Position angeordnete Wärmetauscheranordnung 102 entlang der Linie IV-IV in Fig.3 zeigt, ist die einteilige Ausbildung der Schiebeführungen 112,113 mit der Frontwand 42 erkennbar. Die obere Schiebeführung 112 ist im Querschnitt etwa L-förmig und die untere Schiebeführung 113 ist etwa T-förmig gestaltet. Die hier parallel zueinander verlaufenden Schiebeführungen 112,113 umgreifen den jeweils zugeordneten oberen und unteren Endbereich 110,111 über die gesamte Längserstreckung des Wärmetauschermoduls 102 randseitig, so dass eine Bewegung des Moduls 100 in vertikaler Richtung oder in Fahrzeuglängsrichtung verunmöglicht ist. Zudem sind der obere und der untere Endbereiche 110,111 des Wärmetauschermoduls 100 hier über jeweils eine mit der zugeordneten Schiebeführungen 112,113 verschraubte Winkelleiste 114,115 an der Tragstruktur lagesicher befestigt. Natürlich könnte das Modul 100 auch andersartig z.B. über Laschen mit der Frontwand 42 verbunden werden. Die Winkelleisten 114,115 verlaufen hier über die gesamte Längserstreckung des Wärmetauschermoduls 100. Mit anderen Worten ist das Wärmetauschermodul 100 derart an der Frontwand 42 der Tragstruktur angebracht, daß es hier bei den Bereich der Durchtrittsöffnung 44 beaufschlagenden Frontalkollisionen unter Absorption von Aufprallenergie verstärkend mit den oberen und unteren Wandbereichen 106,108 der Frontwand 42 zusammenwirkt. Dabei wäre es natürlich auch denkbar, das Wärmetauschermodul 100 beispielsweise in im Bereich der Wandbereiche 105 und 107 angeordnete, vertikale Schiebeführungen von oben oder unten einzuschieben, wobei dann das Wärmetauschermodul 100 verstärkend mit den seitlichen Wandbereichen 106,108 zusammenwirkt. Ist das Wärmetauschermodul 100 alle vier Wandbereiche 105-108 überdeckend ausgebildet, so kann dieses auch an allen vier Wandbereichen 105-108 befestigt sein.

Am unteren Ende der Frontwand 42 sind parallel zueinander und in Fahrzeugquerrichtung verlaufend Schiebeführungen 113,116 vorgesehen, in welche die Längsschenkel 96 des der Frontwand 42 vorgeordneten Frontmoduls 50 - wie mit Pfeilen angedeutet - nach Art des Wärmetauschermoduls 100 einschiebbar und befestigbar sind. Dabei ist von den beiden Längsschenkeln 96 lediglich der von vorne gesehen rechte gezeigt. Auch an der Rückseite der Frontwand 42 können - wie in Fig.4 gezeigt - weitere Schiebeführungen 118,119 vorgesehen sein, die zu Anbringung eines nicht gezeigten weiteren Wärmetauschermoduls oder eines sonstigen Aggregates dienen. In Fig.4 ist weiter eine Lüftereinrichtung 120 gestrichelt angedeutet, die beispielsweise über eine Schraubverbindung an der Rückseite des Moduls 100 oder der Frontwand 42 befestigt sein kann. Anstelle der Lüftereinrichtung 120 oder des Moduls 103 können auch andere Module wie z.B. Kondensator oder Motorhaubenschloß Verwendung finden.

Die Schiebeführungen 112,113 können auch als Schwalbenschwanzführungen ausgebildet sein, auf deren Querschnitt die zugeordneten Endbereiche 110,111 des Wärmetauschermoduls 100 angepaßt sind. Hierdurch wird eine besonders zugfeste, formschlüssige Verbindung zwischen den entsprechenden Wandbereichen 105-108 und dem Wärmetauschermoduls 100 geschaffen. Zudem wäre es auch denkbar, das Wärmetauschermodul 100 hinter der Frontwand 42 oder in deren Ebene anzuordnen.

Zumindest das Wärmetauschermodul 100 ist hier als sog. Ganz-Aluminium-Kühler ausgebildet, der Aufprallenergie besonders gut aufnehmen kann. Dabei sind sowohl die Wasserkästen im oberen und unteren Endbereich 110,111 des Moduls 100 als auch die diese verbindenden Rohre aus einer Aluminiumlegierung hergestellt und miteinander derart verbunden, dass der Kühler 100 zur Aufnahme und Vergleichmäßigung hoher Verformungskräfte geeignet ist. Die im Überdeckungsbereich des Wärmetauschermoduls 100 angeordneten weiteren Module können ebenfalls nach Art des vorbeschriebenen Kühlers ausgebildet sein und zur weiteren Steigerung des Energieaufnahmevermögens der gesamten Wärmetauscheranordnung 102 beitragen.

Anstelle der hier beschriebenen Tragstruktur aus ebenen Leichtbauplatten kann natürlich auch eine Tragstruktur in einer heute üblichen Karosserieschalen- oder Rahmenbauweise verwendet werden, deren Vorbaustruktur zumindest die die Durchtrittsöffnung auf zwei einander gegenüberliegenden Seiten begrenzenden Wandbereiche umfaßt.

## Patentansprüche

1. Wärmetauscheranordnung an einer vorderen Tragstruktur (24) eines Kraftwagens mit einer weitgehend von einem Wärmetauschermodul (100) der Anordnung (102) überdeckten Durchtrittsöffnung (44) für einen Kühlluftstrom, die sich in einer Fahrzeugquerebene erstreckt und auf zwei einander gegenüberliegenden Seiten von Wandbereichen (105-108) der Tragstruktur (24) begrenzt ist, wobei die Wandbereiche (105-108) zur Knautschzone des Vorbaus gehören und das Wärmetauschermodul (100) derart an der vorderen Tragstruktur (24) angebracht ist, daß es bei den Bereich der Durchtrittsöffnung (44) beaufschlagenden Frontalkollisionen unter Absorption von Aufprallenergie verstärkend mit den Wandbereichen (105-108) der Tragstruktur (24) zusammenwirkt,
**dadurch gekennzeichnet,**
• **dass** das Wärmetauschermodul (100) vor der Durchtrittsöffnung (44) angeordnet ist und mit wenigstens zwei entgegengesetzten Endbereichen (110,111) über die Durchtrittsöffnung (44) hinausragt und
• **dass** zwei einander entgegengesetzte Endbereiche (110,111) des Wärmetauschermoduls (100) annähernd über ihre gesamte Längserstreckung an der Tragstruktur (24) befestigt sind.

2. Wärmetauscheranordnung nach Anspruch 1,
**dadurch gekennzeichnet,**
**dass** die Durchtrittsöffnung (44) oben und unten von Wandbereichen (106,108) der Tragstruktur (24) begrenzt ist und dass die Wandbereiche (106,108) zumindest teilweise vom oberen und unteren Endbereich (110,111) des Wärmetauschermoduls (100) überdeckt sind.

3. Wärmetauscheranordnung nach Anspruch 1,
**dadurch gekennzeichnet,**
**dass** die vordere Tragstruktur (24) eine großformatige Frontwand (42) umfaßt, aus deren Mittelbereich die Durchtrittsöffnung (44) ausgespart ist.

4. Wärmetauscheranordnung nach Anspruch 3,
**dadurch gekennzeichnet,**
**dass** die Frontwand (42) eine insbesondere aus einem Strangpressprofil bestehende Leichtbauwand ist.

5. Wärmetauscheranordnung nach Anspruch 1,
**dadurch gekennzeichnet,**
**dass** das Wärmetauschermodul (100) mit den überstehenden Endbereichen (110,111) schubladenartig in zugeordnete Schiebeführungen (112,113) der Wandbereiche (106,108) einschiebbar und in der eingeschobenen Position über Fixiermittel (114,115) lagesicherbar ist.

6. Wärmetauscheranordnung nach Anspruch 4 und 5,
**dadurch gekennzeichnet,**
**dass** die Schiebeführungen (112,113) einteilig mit der Frontwand (42) ausgebildet sind.

7. Wärmetauscheranordnung nach Anspruch 1,
**dadurch gekennzeichnet,**
**dass** das Wärmetauschermodul (100) dem Kühlwasserkreislauf eines Motors (70) zugeordnet ist und dass im Überdeckungsbereich mit dem Wärmetauschermodul (100) mindestens ein weiteres Wärmetauschermodul (103) angeordnet ist.

8. Wärmetauscheranordnung nach Anspruch 3,
**dadurch gekennzeichnet,**
**dass** an der Frontwand (42) weitere Aggregate, insbesondere ein dieser vorgelagertes Frontmodul (50) anbringbar sind.

## Claims

1. Heat exchanger system on a front support structure (24) of a motor vehicle with a circulation orifice (44) for a cool air flow largely covered by a heat exchanger module (100) of the system (102), which extends in a vehicle transverse plane and is bounded on two oppositely lying sides by wall regions (105-108) of the support structure (24), which wall regions (105-108) belong to the deformable zone of the front structure, and the heat exchanger module (100) is mounted on the front support structure (24) in such a way that it co-operates with the wall regions (105-108) of the support structure (24), imparting strength whilst absorbing impact energy in the event of frontal collisions transmitting stress to the region of the circulation orifice (44),
**characterised in that**
X the heat exchanger module (100) is disposed in front of the circulation orifice (44) and at least two opposing end regions (110, 111) project beyond the circulation orifice (44) and
X two mutually opposing end regions (110, 111) of the heat exchanger module (100) are secured to the support structure (24) across almost their entire longitudinal extension.

2. Heat exchanger system as claimed in claim 1,
**characterised in that**
the circulation orifice (44) is bounded at the top and bottom by wall regions (106, 108) of the support structure (24) and the wall regions (106, 108) are at least partially overlapped by top and bottom end regions (110, 111) of the heat exchanger module (100).

3. Heat exchanger module as claimed in claim 1,
**characterised in that**
the front support structure (24) incorporates a large-format front wall (42), from the middle region of which the circulation orifice (44) is cut.

4. Heat exchanger system as claimed in claim 3,
**characterised in that**
the front wall (42) is a wall of lightweight construction consisting in particular of an extruded section.

5. Heat exchanger system as claimed in claim 1,
**characterised in that**
the heat exchanger nodule (100) can be inserted in the manner of a drawer by the projecting end regions (110, 111) in co-operating slide guides (112, 113) of the wall regions (106, 108) and its position is secured in the inserted position by fixing means (114, 115).

6. Heat exchanger system as claimed in claims 4 and 5,
**characterised in that**
the slide guides (112, 113) are made integrally with the front wall (42).

7. Heat exchanger system as claimed in claim 1,
**characterised in that**
the heat exchanger module (100) co-operates with the coolant water circuit of an engine (70) and at least one other heat exchanger module (103) is disposed in the region overlapping with the heat exchanger module (100).

8. Heat exchanger system as claimed in claim 3,
**characterised in that**
other units can be mounted on the front wall (42), in particular a front module (50) mounted on the front thereof.

## Revendications

1. Système d'échangeur thermique sur une structure de support avant (24) d'un véhicule automobile, comportant une ouverture de passage (44) pour un courant d'air de refroidissement, qui est couverte en grande partie par un module (100) du système d'échangeur thermique (102) et qui s'étend dans un plan du véhicule et est délimité sur deux côtés opposés par des zones de paroi (105-108) de la structure de support (24), les zones de paroi (105-108) faisant partie de la zone déformable de l'avant-corps du véhicule et le module d'échangeur thermique (100) étant agencé contre la structure de support (24) avant de telle sorte que, en cas de collisions frontales sollicitant la zone de l'ouverture de passage (44), ledit module coopère de manière renforcée avec les zones de paroi (105-108) de la structure de support (24) par l'absorption de l'énergie du choc, **caractérisé**
• **en ce que** le module d'échangeur thermique (100) est agencé devant l'ouverture de passage (44) et s'avance en saillie hors de l'ouverture de passage (44) avec au moins deux zones d'extrémité (110, 111) opposées, et
• **en ce que** deux zones d'extrémité (110, 111) opposées du module d'échangeur thermique (100) sont fixées sur à peu près toute leur longueur contre la structure de support (24).

2. Système d'échangeur thermique selon la revendication 1, **caractérisé en ce que** l'ouverture de passage (44) est délimitée en haut et en bas par des zones de paroi (106, 108) de la structure de support (24) et **en ce que** les zones de paroi (106, 108) sont couvertes au moins en partie par la zone d'extrémité supérieure et inférieure (110, 111) du module d'échangeur thermique (100).

3. Système d'échangeur thermique selon la revendication 1, **caractérisé en ce que** la structure de support (24) avant comporte une paroi frontale (42) de grand format, dans la zone centrale de laquelle est ménagée l'ouverture de passage (44).

4. Système d'échangeur thermique selon la revendication 3, **caractérisé en ce que** la paroi frontale (42) est une paroi de construction légère, réalisée en particulier dans un profilé extrudé.

5. Système d'échangeur thermique selon la revendication 1, **caractérisé en ce que** le module d'échangeur thermique (100) peut être inséré à la manière d'un tiroir, avec les zones d'extrémité (110, 111) en saillie, dans des guidages coulissants (112, 113) correspondants dans les zones de paroi (106, 108) et peut être bloqué dans la position insérée par l'intermédiaire de moyens de blocage (114, 115).

6. Système d'échangeur thermique selon les revendications 4 et 5, **caractérisé en ce que** les guidages coulissants (112, 113) sont réalisés d'un seul tenant avec la paroi frontale (42).

7. Système d'échangeur thermique selon la revendication 1, **caractérisé en ce que** le module d'échangeur thermique (100) est associé au circuit d'eau de refroidissement d'un moteur (70) et **en ce qu'**au moins un autre module d'échangeur thermique (103) est agencé dans la zone de recouvrement avec le module d'échangeur thermique (100).

8. Système d'échangeur thermique selon la revendication 3, **caractérisé en ce que** d'autres organes peuvent être montés contre la paroi frontale (42), en particulier un module frontal (50) agencé devant celle-ci.
